(19) Europäisches Patentamt
European Patent Office
Office européen des brevets

(11) **EP 3 485 239 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **17735046.9**

(22) Anmeldetag: **26.06.2017**

(51) Internationale Patentklassifikation (IPC):
***G01N 9/00*** *(2006.01)*     ***G01F 23/296*** *(2022.01)*
***G01N 11/16*** *(2006.01)*

(52) Gemeinsame Patentklassifikation (CPC):
**G01F 23/2967; G01N 9/002; G01N 11/16;**
G01N 2009/006

(86) Internationale Anmeldenummer:
**PCT/EP2017/065647**

(87) Internationale Veröffentlichungsnummer:
**WO 2018/010941 (18.01.2018 Gazette 2018/03)**

(54) **VIBRONISCHER SENSOR**

VIBRONIC SENSOR

CAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2016 DE 102016112743**

(43) Veröffentlichungstag der Anmeldung:
**22.05.2019 Patentblatt 2019/21**

(73) Patentinhaber: **Endress+Hauser SE+Co. KG**
**79689 Maulburg (DE)**

(72) Erfinder:
• **BRENGARTNER, Tobias**
**79312 Emmendingen (DE)**

• **SAUTERMEISTER, Manuel**
**79650 Schopfheim (DE)**
• **D'ANGELICO, Sascha**
**79595 Rümmingen (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
WO-A1-2011/038985    WO-A1-2011/038985
DE-A1- 10 050 299    DE-A1- 10 050 299
DE-A1- 102009 028 022    DE-A1- 102009 028 022
DE-A1- 102011 075 113    DE-A1- 102011 075 113
US-A1- 2012 279 283

**Beschreibung**

Die Erfindung betrifft ein Verfahren zur Bestimmung und/oder Überwachung der Dichte und/oder der Viskosität eines Mediums in einem Behältnis mittels eines vibronischen Sensors sowie eine zur Durchführung des Verfahrens geeignete Vorrichtung.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein.

Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass-Filters vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz $\omega$, Amplitude A und/oder Phase $\Phi$. Entsprechend werden Änderungen in diesen Größen üblicherweise zur Bestimmung der jeweiligen Prozessgröße herangezogen, wie beispielsweise ein vorgegebener Füllstand eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Wie beispielweise in der DE10050299A1 beschrieben, kann die Viskosität eines Mediums mittels eines vibronischen Sensors anhand der Frequenz-Phase-Kurve ($\Phi=g(\omega)$) bestimmt werden. Dieses Vorgehen basiert auf der Abhängigkeit der Dämpfung der schwingfähigen Einheit von der Viskosität des jeweiligen Mediums. Dabei gilt, dass je geringer die Viskosität ist, desto steiler fällt die Frequenz-Phase-Kurve ab. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Dazu können entweder zwei unterschiedliche Phasenwerte eingestellt und die zugehörige Frequenzänderung bestimmt werden, oder es wird ein vorgegebenes Frequenzband durchfahren und festgestellt, wenn zumindest zwei vorgegebene Phasenwerte erreicht werden.

Aus der DE102007043811A1 ist darüber hinaus bekannt geworden, aus einer Änderung der Eigenfrequenz und/oder Resonanzfrequenz und/oder der Phasenlage auf eine Änderung der Viskosität zu schließen und/oder aufgrund entsprechend hinterlegter Abhängigkeiten der Schwingungen der schwingfähigen Einheit von der Viskosität des jeweiligen Mediums die Viskosität zu bestimmen. Auch bei diesem Vorgehen muss die Abhängigkeit der Bestimmung der Viskosität von der Dichte des Mediums berücksichtigt werden.

Zur Bestimmung und/oder Überwachung der Dichte eines Mediums sind aus der DE10057974A1 ein Verfahren sowie eine Vorrichtung bekannt geworden, mittels welcher/welchem der Einfluss von zumindest einer Störgröße, beispielswese der Viskosität, auf die Schwingungsfrequenz der mechanisch schwingfähigen Einheit zu ermitteln und entsprechend zu kompensieren. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Dabei wird die Dichte im Wesentlichen nach der Formel

$$\rho_{Med} = \frac{1}{K}\left[\left(\frac{f_{0,Vak} + C \cdot t + A \cdot t^2}{f_{T,P,Med}}\right)^2 \cdot (1 + D \cdot p) - 1\right]$$

Bestimmt, wobei K die Dichteempfindlichkeit der mechanisch schwingfähigen Einheit ist, $F_{0,vak}$ die Frequenz der mechanischen Schwingungen im Vakuum, C und A den linearen, bzw. quadratischen Temperaturkoeffizienten der mechanisch schwingfähigen Einheit, t die Prozesstemperatur, $F_{0,med}$ die Frequenz der mechanischen Schwingungen im Medium, D den Druckkoeffizienten, und p der Druck des Mediums.

Durch die empirische Annahme, dass die Messung für eine bestimmte vorgebbare Phasenverschiebung unabhängig von der Viskosität ist, ergeben sich jedoch grundsätzliche Einschränkungen. Ab einer bestimmten Viskosität kann anhand der beschriebenen Messprinzipien keine genaue Messung der Dichte mehr gewährleistet werden. So muss für jedes Medium muss eine maximal zulässige Viskosität bestimmt werden, bis zu welcher die Dichtebestimmung durchgeführt werden soll. Um dieser Problematik zu entgehen sind aus der bisher nicht veröffentlichten deutschen Patentanmeldung mit dem Aktenzeichen 102015102834.4 ein vibronischer Sensor sowie ein Verfahren zu dessen Betrieb bekannt geworden, mittels welchem die Dichte und/oder die Viskosität in einem erweiterten Anwendungsbereich bestimmbar sind. Das dort vorgeschlagene analytische Messprinzip berücksichtigt die Interaktionen zwischen der schwingfähigen Einheit und dem Medium. Der Sensor wird bei zwei verschiedenen vorgebbaren Phasenverschiebungen betrieben und aus dem jeweiligen Antwortsignal die Prozessgrößen Dichte und/oder Viskosität ermittelt. Auf die deutsche Patentanmeldung mit dem Aktenzeichen 102015102834.4 wird im Folgenden vollumfänglich Bezug genommen.

Ausgehend vom Stand der Technik liegt der vorliegenden Erfindung die Aufgabe zugrunde, den Anwendungsbereich für die Bestimmung der Dichte und/oder Viskosität mittels eines vibronischen Sensors zu erweitern.

Diese Aufgabe wird gelöst durch die Merkmale des Verfahrensanspruchs 1 sowie durch die Merkmale des Vorrichtungsanspruchs 8.

Bezüglich des Verfahrens wird die Aufgabe gelöst durch ein Verfahren zur Bestimmung und/oder Überwachung der Dichte und/oder der Viskosität eines Mediums in einem Behältnis mittels eines vibronischen Sensors. Eine schwingfähige Einheit wird mittels eines elektrischen Anregesignals zu mechanischen Schwingungen angeregt, und die mechanischen Schwingungen der mechanisch schwingfähigen Einheit werden empfangen und in ein elektrisches Empfangssignal umgewandelt. Das Anregesignal wird ausgehend vom Empfangssignal derart erzeugt, dass zumindest eine vorgebbare Phasenverschiebung zwischen dem Anregesignal und dem Empfangssignal vorliegt, wobei aus dem Empfangssignal bei Vorliegen der vorgebbaren Phasenverschiebung eine Frequenz des Anregesignals bestimmt wird. Erfindungsgemäß wird/werden ferner aus dem Empfangssignal bei Vorliegen der vorgebbaren Phasenverschiebung eine Dämpfung und/oder eine von der Dämpfung abhängigen Größe bestimmt, und zumindest aus der Dämpfung und/oder der von der Dämpfung abhängigen Größe, und aus der Frequenz des Anregesignals die Dichte und/oder die Viskosität des Mediums analytisch ermittelt. Das Verfahren ist sowohl anwendbar, wenn eine einzige vorgebbare Phasenverschiebung zwischen dem Anregesignal und dem Empfangssignal eingestellt wird. Es ist aber ebenfalls für den Einsatz bei zwei oder mehreren vorgebbaren Phasenverschiebungen geeignet. Insbesondere können eine erste und eine zweite Phasenverschiebung in vorgebbaren Zeitintervallen abwechselnd eingestellt werden.

Die Dämpfung D, auch als Dämpfungsgrad, Dämpfungsmaß oder Lehrsches Dämpfungsmaß bezeichnet, beschreibt allgemein das Verhalten eines schwingfähigen Systems nach einer Anregung. Es handelt sich üblicherweise um eine dimensionslose Größe, welche im Prinzip den Energieverlust des schwingfähigen Systems angibt. Eine sehr eng mit der Dämpfung verwandte Größe ist die Güte Q, auch als Gütefaktor, Q-Faktor oder Resonanzschärfe bezeichnet, eins schwingfähigen Systems. Einer hohen Güte Q entspricht beispielsweise eine schwache Dämpfung D. Eine Bestimmung der Dichte und/oder Viskosität anhand der Güte Q der schwingfähigen Einheit, welche mit der Dämpfung D über eine mathematische Relation zusammenhängt, fällt also beispielsweise ebenfalls unter den Schutzumfang der vorliegenden Erfindung. Es sei darauf verwiesen, dass sowohl die Dämpfung als auch die Güte auf dem Gebiet der mechanischen Schwingungslehre dem Fachmann allgemein bekannte Größen darstellen, so dass an dieser Stelle bewusst von der Angabe der jeweiligen Formeln und Relationen abgesehen wird.

Das erfindungsgemäße Verfahren bietet den Vorteil, dass es auf einer analytischen Grundlage für die Bestimmung der Dichte und/oder Viskosität eines Mediums mittels eines vibronischen Sensors beruht. Es handelt sich dabei um ein besonders einfach implementierbares Messprinzip. Im Gegensatz dem in der deutschen Patentanmeldung mit dem Aktenzeichen 102015102834.4 beschriebenen Verfahren ist die Einstellung zweier verschiedener Phasenverschiebungen nicht mehr zwingend notwendig. Das erfindungsgemäße Verfahren sowie der entsprechende Sensor sind universell und unabhängig von der Viskosität des jeweiligen Mediums einsetzbar. Dies gilt insbesondere für hoch viskose Medien, in welchen die schwingfähige Einheit gerade noch eine Schwingungsbewegung ausführen kann. Neben den genannten Vereinfachungen und der Erweiterung des Anwendungsbereiches verschiedener Medien zeichnet sich die erfindungsgemäße Lösung ferner durch eine hohe Genauigkeit in Bezug auf die Bestimmung der Prozessgrößen Dichte und/oder Viskosität aus.

In einer vorteilhaften Ausgestaltung wird als vorgebbare Phasenverschiebung im Wesentlichen +/-90° gewählt. Allgemein wird bevorzugt eine Phasenverschiebung zwischen dem Anregesignal und Empfangssignal eingestellt, welche einer resonanten Schwingung der schwingfähigen Einheit, insbesondere in der Grundschwingungsmode, entspricht. Ein rein mechanischer Oszillator führt beispielsweise bei einer Phasenverschiebung von -90° resonante mechanische Schwingungen aus. Je nach Art der Antriebs-/Empfangeinheit und/oder der Bauweise und Wahl der Komponenten der Elektronikeinheit gilt es jedoch gegebenenfalls, weitere zusätzlich verursachte Phasenverschiebungen ebenfalls zu berücksichtigen. Im Falle des von der Anmelderin vertriebenen LIQUIPHANTEN wird beispielsweise eine zusätzliche Phasenverschiebung von +180° erzeugt, so dass die Phasenverschiebung zwischen Anregesignal und Empfangssignal üblicherweise für eine resonante Schwingung auf +90° einzustellen ist. Für andere Ausgestaltungen eines vibronischen Sensors können beispielsweise auch Phasenverschiebungen von +/-45° oder 0° zwischen dem Anregesignal und Empfangssignal vorteilhaft sein.

Die Antriebs-/Empfangeinheit kann beispielsweise ein piezoelektrisches Element umfassen. Alternativ handelt es sich bei der Antriebs-/Empfangeinheit um eine elektromagnetische oder um eine magnetostriktive Antriebs-/Empfangeinheit handeln.

Eine besonders bevorzugte Ausgestaltung des erfindungsgemäßen Verfahrens sieht vor, dass eine vorgebbare Änderung der Dichte und/oder Viskosität des Mediums überwacht wird.

Eine weitere besonders bevorzugte Ausgestaltung des Verfahrens sieht vor, dass ein vorgegebener Füllstand oder Grenzstand des Mediums in dem Behälter bestimmt und/oder überwacht wird.

Erfindungsgemäß kann also ein nach bestimmbaren Grenzwerten für die Dichte und/oder Viskosität eines Mediums schaltentender vibronischer Sensor, bzw. Grenzstandschalter, realisiert werden. Es können beispielweise Trennschichten, oder Grenzschichten zweier übereinander angeordneter unterschiedlicher Medien oder übereinander angeordneter verschiedener Zustände eines Mediums, z. B. Schaumbildung, in situ überwacht werden. Eine Detektion von Trennschichten oder Grenzständen wird erfindungsgemäß und im Gegensatz zu anderen Verfahren zur Bestimmung der Dichte und/oder Viskosität aus dem Stand der Technik aufgrund der vergleichsweise hohen Geschwindigkeit bei der Bestimmung der jeweiligen Prozessgröße vorteilhaft möglich.

Eine Ausgestaltung des erfindungsgemäßen Verfahrens beinhaltet, dass zumindest eine Referenz-Dämpfung und/oder eine von Referenz-Dämpfung abhängige Größe für den Fall dass die schwingfähige Einheit im zumindest teilweise, bevorzugt vollständig, in ein Referenzmedium eingetauchten Zustand, oder im Falle, dass die schwingfähige Einheit in Abwesenheit eines Mediums mittels eines elektrischen Anregesignals zu mechanischen Schwingungen angeregt wird, bestimmt wird. Bei dem Referenzmedium handelt es sich bevorzugt um ein Medium bekannter Dichte und Viskosität. Unter einer mechanischen Schwingung in Abwesenheit eines Mediums kann sowohl eine Schwingung der mechanisch schwingfähigen Einheit an Luft als auch im Vakuum verstanden werden.

Die mechanischen Schwingungen der mechanisch schwingfähigen Einheit im in ein Referenzmedium eingetauchten Zustand oder in Abwesenheit eines Mediums werden dann empfangen und in ein elektrisches Empfangssignal umgewandelt. Dabei wird bevorzugt das Anregesignal ausgehend vom Empfangssignal derart erzeugt, dass eine vorgebbare Phasenverschiebung zwischen dem Anregesignal und dem Empfangssignal vorliegt, wobei aus dem Empfangssignal bei Vorliegen der vorgebbaren Phasenverschiebung eine Referenz-Frequenz des Anregesignals bestimmt wird. Außerdem ist aus dem Empfangssignal bei Vorliegen der vorgebbaren Phasenverschiebung die Referenz-Dämpfung bestimmbar.

Es ist von Vorteil, wenn zur Bestimmung der Dichte und/oder der Viskosität ein mathematisches Modell mit zumindest einer Bewegungsgleichung für eine Schwingungsbewegung der schwingfähigen Einheit herangezogen wird, für welche Bewegungsgleichung die Interaktion der schwingfähigen Einheit mit dem Medium in Form einer Druckkraft und einer Reibungskraft , welche durch das die schwingfähige Einheit umgebende Medium entstehen, sowie einer Reibungskraft , welche infolge einer gleichförmigen Bewegung der schwingfähigen Einheit innerhalb des Mediums entsteht, berücksichtigt wird. Es werden also zur Bestimmung der Dichte und/oder Viskosität die Interaktionen zwischen der schwingfähigen Einheit und dem jeweiligen Medium sowie die wechselseitige Beeinflussung der beiden Größen Dichte und Viskosität berücksichtigt. Aufgrund der Bestrebung, eine analytische Lösung der Bewegungsgleichung zu erhalten, wird die Schwingungsbewegung, welche in der Realität einer Biegeschwingung entspricht, durch eine Drehschwingung angenähert. Ferner dienen als Annäherung der Geometrie der schwingfähigen Einheit für jeden der zwei Gabelzinken zwei elliptische Zylinder unterschiedlicher Ausmaße.

Hierzu sei erwähnt, dass für die schwingfähige Einheit ohne Beschränkung der Allgemeinheit auch eine beliebige andere Geometrie gewählt werden kann. In diesem Falle müssen jedoch die geometrischen Koeffizienten entsprechend angepasst werden.

Eine besonders bevorzugte Ausgestaltung der vorliegenden Erfindung beinhaltet, dass die Dämpfung und/oder die Referenz-Dämpfung und/oder die von der Dämpfung und/oder Referenz-Dämpfung abhängige Größe

- anhand einer Steigung einer Phase des Empfangssignals bei der Frequenz und/oder Referenz-Frequenz, des Anregesignals bei Vorliegen der vorgebbaren Phasenverschiebung,
- anhand des zeitlichen Verlaufs der Amplitude des Empfangssignals nach einem Abschalten des Anregesignals, und/oder
- anhand einer Modulation des Anregesignals

bestimmt wird.

Aus der DE10050299A1 ist beispielsweise bekannt geworden, die Viskosität eines Mediums anhand der Steigung der Phase zwischen Anregesignal und Empfangssignal zu berechnen. Eine Variante des erfindungsgemäßen Verfahrens sieht dagegen vor, aus der Steigung der Phase bei der Frequenz des Anregesignals bei Vorliegen der vorgebbaren Phasenverschiebung die Dämpfung und/oder eine davon abhängige Größe zu ermitteln.

Eine Messung des zeitlichen Verlaufs der Amplitude des Empfangssignals nach einem Abschalten des Anregesignals, also das Abklingverhalten der Schwingungen der mechanisch schwingfähigen Einheit, ist aus der DE102007043811A1 bekannt geworden. Erfindungsgemäß wird aus dem Abklingverhalten auf die Dämpfung oder eine von der Dämpfung abhängige Größe geschlossen und anschließend anhand der Dämpfung die Dichte und/oder Viskosität bestimmt.

Für die Ermittlung der Dämpfung anhand einer Modulation des Anregesignals sei wiederum auf die bisher nicht veröffentlichte deutsche Patentanmeldung mit dem Aktenzeichen 102015101891.8 verwiesen. Bei dieser Methode zur Bestimmung und/oder Ermittlung der Dämpfung ist es vorteilhaft ausreichend, nur eine einzige vorgebbare Phasenverschiebung zwischen dem Anregesignal und Empfangssignal einzustellen, was einer Anregung des Sensors bei einer einzigen Frequenz entspricht.

Auf alle drei im Zusammenhang mit der Bestimmung und/oder Ermittlung der Dämpfung oder der von der Dämpfung abhängigen Größe Dokumente ist hiermit vollumfänglich Bezug genommen.

Es sei darauf verwiesen, dass neben den drei genannten Möglichkeiten zur Bestimmung der Dämpfung und/oder zumindest einer davon abhängigen Größe weitere Verfahren denkbar sind, welche allesamt unter die vorliegende Erfindung fallen. Der Vorteil in einer Ermittlung der Dämpfung zur Bestimmung der Dichte und/oder Viskosität besteht darin, dass mithilfe der Dämpfung die erfindungsgemäße, analytische Bestimmung der Dichte und/oder Viskosität möglich wird/werden.

Bevorzugt ist die schwingfähige Einheit zur Bestimmung der Dichte und/oder Viskosität in einer definierten Position innerhalb des Behälters derart angeordnet, dass sie bis zu einer bestimmbaren Eintauchtiefe, insbesondere vollständig, in das Medium eintaucht.

Bezüglich der Vorrichtung wird die der Erfindung zugrundeliegende Aufgabe gelöst durch einen vibronischer Sensor zur Bestimmung und/oder Überwachung zumindest einer Prozessgröße eines Mediums in einem Behältnis zumindest mit einer Elektronikeinheit und einer schwingfähigen Einheit, wobei die Elektronikeinheit dazu ausgestaltet ist, zumindest eine Ausgestaltung des erfindungsgemäßen Verfahrens auszuführen.

Vorteilhaft umfasst die Elektronikeinheit eine Speichereinheit. In dieser Speichereinheit können beispielsweise die Referenz-Dämpfung, die Referenz-Frequenz oder auch andere Konstanten und/oder Parameter hinterlegt sein.

In einer bevorzugten Ausgestaltung des vibronischen Sensors ist die Elektronikeinheit dazu ausgestaltet ist, die die schwingfähige Einheit mit einem Anregesignal zu beaufschlagen, welches zusammengesetzt ist aus einem Anrege-Trägersignal mit einer Anrege-Trägerfrequenz und einem Anrege-Modulationssignal mit einer Anrege-Modulationsfrequenz, und ein Empfangssignal von der schwingfähigen Einheit zu empfangen, welches zusammengesetzt ist aus einem Empfangs-Trägersignal und einem Empfangs-Modulationssignal. Ferner ist die Elektronikeinheit dazu ausgestaltet, aus der Phasenverschiebung zwischen dem Anrege-Modulationssignal und dem Empfangs-Modulationssignal und/oder zumindest aus dem Empfangs-Trägersignal zumindest die Dämpfung D und/oder die Referenz-Dämpfung $D_0$ zu bestimmen.

Es ist von Vorteil, wenn die mechanisch schwingfähige Einheit eine Schwinggabel, ein Einstab, oder eine Membran ist.

Die im Zusammenhang mit der erfindungsgemäßen Vorrichtung genannten Ausführungsformen sind mutatis mutandis auch für das erfindungsgemäße Verfahren anwendbar und umgekehrt.

Zusammenfassend ergeben sich durch die vorliegende Erfindung gegenüber dem Stand der Technik folgende Vorteile:

- die Dichte kann unabhängig von der Viskosität des Mediums ermittelt werden,
- die Viskosität kann unabhängig von der Dichte des Mediums ermittelt werden, und
- zur Bestimmung der Dichte und/Viskosität kann es ausreichen, eine einzige Phasenverschiebung zwischen Anregesignal und Empfangssignal einzustellen,
- die erfindungsgemäßen analytischen Formeln für die Dichte und/oder Viskosität sind genauer als die aus dem Stand der Technik bekannten Formeln und
- die Geschwindigkeit, mit welcher eine Bestimmung der Dichte und/oder Viskosität bestimmt werden kann, ist im Vergleich zu aus dem Stand der Technik bekannten Verfahren deutlich erhöht.

Die Erfindung sowie ihre vorteilhaften Ausgestaltungen werden nachfolgend anhand der Figuren Fig. 1 - Fig. 3 näher beschrieben. Es zeigt:

Fig. 1: eine schematische Skizze eines vibronischen Sensors gemäß Stand der Technik, und

Fig. 2: eine schematische Zeichnung einer Schwinggabel.

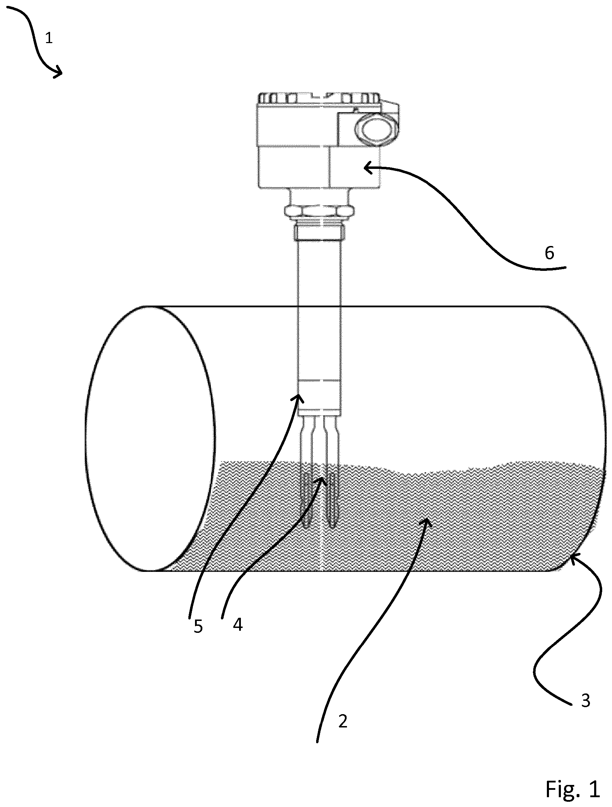

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

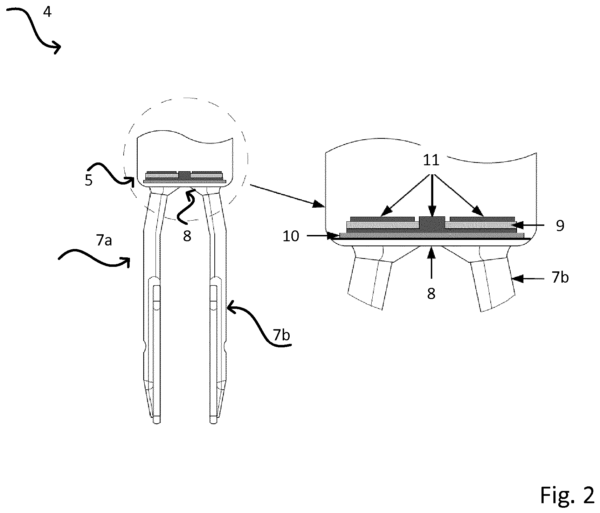

In Fig. 2 ist eine schwingfähige Einheit 4 in Form einer Schwinggabel, wie sie beispielsweise im von der Anmelderin unter dem Namen LIQUIPHANT vertriebenen vibronischen Sensor 1 integriert wird, gezeigt. Die Schwinggabel 4 umfasst zwei auf eine Membran 8 aufgebrachte Schwingstäbe 7a,7b, oder auch Gabelzinken. Um die Schwingstäbe 7a,7b in mechanische Schwingungen zu versetzen, wird mittels einer auf der den Schwingstäben 7a,7b abgewandten Seite der Membran 8 stoffschlüssig angebrachten Antriebs-/Empfangseinheit 5 eine Kraft auf die Membran 8 aufgeprägt. Die Antriebs-/Empfangseinheit 5 ist eine elektromechanische Wandlereinheit, und umfasst beispielsweise ein piezoelektrisches Element 9, oder auch einen elektromagnetischen Antrieb. Entweder sind die Antriebseinheit 5 und die Empfangseinheit als zwei separate Einheiten aufgebaut, oder als kombinierte Antriebs-/Empfangseinheit. In der Detailzeichnung auf der rechten Seite ist die Antriebs-/Empfangseinheit 5 detailliert dargestellt. Ein piezoelektrisches Element 9 ist auf einer Steatitscheibe 10 angeordnet und mit Elektroden 11 zum Beaufschlagen des Anregesignals sowie zum Abgreifen des Empfangssignals ausgestattet.

Im Falle, dass die Antriebs-/Empfangseinheit 5 ein piezoelektrisches Element 9 umfasst, wird die der Membran 8 aufgeprägte Kraft über das Anlegen eines Anregesignals $U_A$, beispielweise in Form einer elektrischen Wechselspannung, generiert. Eine Änderung der angelegten elektrischen Spannung bewirkt eine Änderung der geometrischen Form der Antriebs-/Empfangseinheit 5, also eine Kontraktion bzw. eine Relaxation innerhalb des piezoelektrischen Elements 9 derart, dass das Anlegen einer elektrischen Wechselspannung als Anregesignal $U_A$ zu einer Schwingung der stoffschlüssig mit der Antriebs-/Empfangseinheit 5 verbundenen Membran 8 hervorruft.

Wie eingangs beschrieben, besteht das Ziel der vorliegenden Erfindung darin, den Anwendungsbereich für die Bestimmung der Dichte und/oder Viskosität mittels eines vibronischen Sensors 1 zu erweitern. Das erfindungsgemäß angewendete analytische Modell zur Beschreibung der Schwingungsbewegungen eines vibronischen Sensors 1 entspricht in großen Teilen dem in der bisher unveröffentlichten deutschen Patentanmeldung mit dem Aktenzeichen 102015102834.4 beschriebenen, auf welche bereits vollumfänglich Bezug genommen wurde. Deshalb wird die vollständige Herleitung des analytischen Modells an dieser Stelle nicht erneut angeführt.

Die folgenden Ausführungen beziehen sich ohne Beschränkung der Allgemeinheit auf eine resonante Schwingung mit einer Phasenverschiebung von $\Delta\varphi = 90°$ zwischen dem Anregesignal $U_A$ und dem Empfangssignal $U_E$ und einer Referenz-Frequenz $\omega_0$, welche einer ungedämpften Schwingung der schwingfähigen Einheit 4 im Vakuum entspricht. Die Überlegungen lassen sich dabei jeweils bei Bedarf auf andere Fälle (andere Phasenverschiebung $\Delta\varphi$, Referenzmedium 2 anstelle einer ungedämpften Schwingung im Vakuum) übertragen.

Erfindungsgemäß wird nun die Referenz-Frequenz $\omega_0$ mit der Frequenz $\omega$ des Anregesignals $U_A$ der schwingfähigen Einheit 4 bei Vorliegen der vorgebbaren Phasenverschiebung $\Delta\varphi$ ins Verhältnis gesetzt. Dadurch ergibt sich

$$\frac{\omega_0^2}{\omega_{90}^2} = 1 + a_1\sqrt{\frac{\rho\eta}{\omega_{90}}} + a_2\rho$$

Dabei sind $\rho$ die Dichte und $\eta$ die Viskosität des Mediums, während die Koeffizienten $a_1$ und $a_2$ geometrische Sensorkonstanten beschreiben.

Wird ferner die Dämpfung $D_0$ des Sensors im Vakuum auf die Dämpfung $D_{90}$ des vibronischen Sensors im Medium bezogen, so resultiert

$$\frac{D_{90}\omega_0}{D_0\omega_{90}} = 1 + a_3\sqrt{\rho\eta\omega_{90}} + a_4\eta + a_5$$

wobei $a_3$ - $a_5$ ebenfalls geometrische Sensorkonstanten beschreiben.

Die Dichte lässt sich dann anhand folgender Formeln berechnen:

$$\rho = \frac{A}{C} - \frac{B(AE + BD - BG - \sqrt{A^2E^2 - 2ABDE + 2ABEG + 4CFAD - 4CFAG + B^2D^2 - 2B^2DG + B^2G^2})}{C(2BE - 2CF)}$$

Für die Viskosität gilt dagegen:

$$\eta = \frac{(AE^2 - E\sqrt{A^2E^2 - 2ABDE + 2ABEG + 4CFAD - 4CFAG + B^2D^2 - 2B^2DG + B^2G^2} + F(2CD - 2CG) - BDE + BEG)}{2CF^2 - 2BEF}$$

Die als Großbuchstaben gekennzeichneten Formelzeichen stellen dabei jeweils Abkürzungen für folgende Terme dar:

$$A = \frac{\omega_0^2}{\omega_{90}^2} - 1$$

$$B = \frac{a1}{\sqrt{\omega_{90}}}$$

$$C = a_2$$

$$D = \frac{D_{90}\omega_0}{D_0\omega_{90}} - 1$$

$$E = a_3\sqrt{\omega_{90}}$$

$$F = a_4$$

$$G = a_5$$

Zur Bestimmung der Dichte $\rho$ und/oder der Viskosität $\eta$ eines Mediums 2 werden also erfindungsgemäß folgende Schritte ausgeführt:

Vor der Inbetriebnahme des vibronischen Sensors:

1. Bestimmung der Größen $\omega_0$ und $D_0$ jeweils im Vakuum, und
2. Bestimmung, insbesondere experimentelle Bestimmung der geometrischen Sensorkonstanten $a_1$ - $a_5$ in einer geeigneten Anzahl wählbarer sogenannter Abgleichmedien bekannter Dichte $\rho$ und Viskosität $\eta$.

Während des Betriebs des vibronischen Sensors:

3. Kontinuierliche Messung/Bestimmung von $\omega_{90}$ und $D_{90}$, und
4. Kontinuierliche Berechnung der Dichte $\rho$ und der Viskosität $\eta$.

Zur Bestimmung und/oder Ermittlung der Dämpfung $D_{90}$ des vibronischen Sensors 1 sind erfindungsgemäß mehrere verschiedene Möglichkeiten vorhanden. Beispielsweise kann die Dämpfung $D_{90}$ des vibronischen Sensors 1 bei Vorliegen der vorgebbaren Phasenverschiebung $\Delta\varphi = 90°$ zwischen dem Anregesignal $U_A$ und dem Empfangssignal $U_E$ anhand der Steigung der Phase $\frac{d\varphi}{d\omega}$ bei der Frequenz $\omega_{90}$ ermittelt werden. In diesem Fall gilt

$$\left.\frac{d\varphi}{d\omega}\right|_{\omega=\omega_{90}} = \frac{1}{D_{90}\omega_{90}}$$

und damit

$$D_{90} = \frac{1}{\left.\dfrac{d\varphi}{d\omega}\right|_{\omega=\omega_{90}} \cdot \omega_{90}}$$

**Bezugszeichenliste**

| | |
|---|---|
| 1 | Vibronischer Sensor |
| 2 | Medium |
| 3 | Behälter |
| 4 | Schwingfähige Einheit |
| 5 | Elektromechanische Wandlereinheit |
| 6 | Elektronikeinheit |
| 7a,7b | Schwingstäbe der schwingfähigen Einheit |
| 8 | Membran |
| 9 | piezoelektrisches Element |
| 10 | Steatitscheibe |
| 11 | Elektroden |

| | |
|---|---|
| $U_A$ | Anregesignal |
| $U_E$ | Empfangssignal |
| $\Delta\Phi$ | vorgebbare Phasenverschiebung |
| $\rho$ | Dichte des Mediums |
| $v$ | Viskosität des Mediums |
| $\omega, \omega_{90}$ | Schwingungsfrequenz der schwingfähigen Einheit in einem Medium, bzw. Schwingungsfrequenz bei einer Phasenverschiebung $\Delta\Phi=90°$ |
| $\omega_0$ | Referenz-Frequenz der schwingfähigen Einheit |
| $\varphi(\omega)$ | Phasengang der schwingfähigen Einheit |
| $a_1$-$a_5$ | geometrische Sensorkonstanten |

**Patentansprüche**

1. Verfahren zur Bestimmung und/oder Überwachung der Dichte ($\rho$) und/oder der Viskosität ($v$) eines Mediums (3) in einem Behältnis (2) mittels eines vibronischen Sensors (1),

   wobei eine schwingfähige Einheit (4) mittels eines elektrischen Anregesignals ($U_A$) zu mechanischen Schwingungen angeregt wird, und die mechanischen Schwingungen der mechanisch schwingfähigen Einheit (4) empfangen und in ein elektrisches Empfangssignal ($U_E$) umgewandelt werden,
   wobei das Anregesignal ($U_A$) ausgehend vom Empfangssignal ($U_E$) derart erzeugt wird, dass zumindest eine

vorgebbare Phasenverschiebung ($\Delta\varphi$) zwischen dem Anregesignal ($U_A$) und dem Empfangssignal ($U_E$) vorliegt, wobei aus dem Empfangssignal ($U_E$) bei Vorliegen der vorgebbaren Phasenverschiebung ($\Delta\varphi$) eine Frequenz (f) des Anregesignals ($U_A$) bestimmt wird, wobei aus dem Empfangssignal ($U_E$) bei Vorliegen der vorgebbaren Phasenverschiebung ($\Delta\varphi$) eine Dämpfung (D) und/oder eine von der Dämpfung (D) abhängigen Größe bestimmt wird,

und

wobei zumindest aus der Dämpfung (D) und/oder der von der Dämpfung (D) abhängigen Größe, und aus der Frequenz (f) des Anregesignals ($U_A$) die Dichte ($\rho$) und/oder die Viskosität (v) des Mediums analytisch ermittelt wird/werden.

2. Verfahren nach Anspruch 1,
wobei als vorgebbare Phasenverschiebung ($\Delta\varphi$) im Wesentlichen +/-90° gewählt wird.

3. Verfahren nach zumindest einem der vorhergehenden Ansprüche,
wobei eine vorgebbare Änderung der Dichte ($\rho$) und/oder Viskosität (v) des Mediums (2) überwacht wird.

4. Verfahren nach Anspruch 1 oder 2,
ein vorgegebener Füllstand oder Grenzstand des Mediums (2) in dem Behälter (3) oder ein Grenzstand zwischen einem ersten und einem zweiten Medium (2) überwacht wird.

5. Verfahren nach zumindest einem der vorhergehenden Ansprüche,
wobei zumindest eine Referenz-Dämpfung ($D_0$) und/oder eine von Referenz-Dämpfung ($D_0$) abhängige Größe für den Fall dass die schwingfähige Einheit (4) im zumindest teilweise in ein Referenzmedium (2) eingetauchten Zustand, oder im Falle, dass die schwingfähige Einheit (4) in Abwesenheit eines Mediums (2) mittels eines elektrischen Anregesignals ($U_A$) zu mechanischen Schwingungen angeregt wird, bestimmt wird.

6. Verfahren nach zumindest einem der vorhergehenden Ansprüche,
wobei zur Bestimmung der Dichte und/oder der Viskosität ein mathematisches Modell mit zumindest einer Bewegungsgleichung für eine Schwingungsbewegung der schwingfähigen Einheit (4) herangezogen wird, für welche Bewegungsgleichung die Interaktion der schwingfähigen Einheit (4) mit dem Medium (2) in Form einer Druckkraft ($F_D$) und einer Reibungskraft ($F_R$), welche durch das die schwingfähige Einheit umgebende Medium entstehen, sowie einer Reibungskraft ($F_{SP}$), welche infolge einer gleichförmigen Bewegung der schwingfähigen Einheit (4) innerhalb des Mediums (2) entsteht, berücksichtigt wird.

7. Verfahren nach zumindest einem der vorhergehenden Ansprüche,
wobei die Dämpfung (D) und/oder die Referenz-Dämpfung ($D_0$) oder die von der Dämpfung (D) und/oder Referenz-Dämpfung ($D_0$) abhängige Größe

- anhand einer Steigung einer Phase ($\varphi$) des Empfangssignals ($U_E$) bei der Frequenz (f) und/oder Referenz-Frequenz ($f_0$), des Anregesignals bei Vorliegen der vorgebbaren Phasenverschiebung ($\Delta\varphi$),
- anhand des zeitlichen Verlaufs der Amplitude (A) des Empfangssignals ($U_E$) nach einem Abschalten des Anregesignals ($U_A$), und/oder
- anhand einer Modulation des Anregesignals ($U_A$) bestimmt wird.

8. Vibronischer Sensor zur Bestimmung und/oder Überwachung zumindest einer Prozessgröße eines Mediums (2) in einem Behältnis (3) zumindest mit einer Elektronikeinheit (6) und einer schwingfähigen Einheit (4),
wobei die Elektronikeinheit (6) dazu ausgestaltet ist, zumindest ein Verfahren gemäß zumindest einem der vorhergehenden Ansprüche auszuführen.

9. Vibronischer Sensor nach Anspruch 8,
wobei die Elektronikeinheit (6) eine Speichereinheit umfasst.

10. Vibronischer Sensor nach Anspruch 8 oder 9,

wobei die Elektronikeinheit (4) dazu ausgestaltet ist, die schwingfähige Einheit (4) mit einem Anregesignal ($U_A$) zu beaufschlagen, welches zusammengesetzt ist aus einem Anrege-Trägersignal mit einer Anrege-Trägerfrequenz und einem Anrege-Modulationssignal mit einer Anrege-Modulationsfrequenz,
und ein Empfangssignal ($U_E$) von der schwingfähigen Einheit (4) zu empfangen, welches zusammengesetzt ist aus einem Empfangs-Trägersignal und einem Empfangs-Modulationssignal,
und wobei die Elektronikeinheit (6) dazu ausgestaltet ist, aus der Phasenverschiebung (Φ) zwischen dem Anrege-Modulationssignal und dem Empfangs-Modulationssignal und/oder zumindest aus dem Empfangs-Trägersignal zumindest die Dämpfung (D) und/oder die Referenz-Dämpfung ($D_0$) zu bestimmen.

**11.** Vibronischer Sensor nach Anspruch 9 oder 10,
wobei die mechanisch schwingfähige Einheit (4) eine Schwinggabel, ein Einstab, oder eine Membran ist.

## Claims

**1.** A method for determining and/or monitoring the density (ρ) and/or the viscosity (v) of a medium (3) in a container (2) using a vibronic sensor (1),

wherein a unit capable of oscillating (4) is caused to mechanically oscillate using an electrical excitation signal ($U_A$), and the mechanical oscillations of the unit capable of mechanically oscillating (4) are received and converted into an electrical received signal ($U_E$),
wherein the excitation signal ($U_A$) is generated based on the received signal ($U_E$) in such a way that there is at least one specifiable phase shift ($\Delta\phi$) between the excitation signal ($U_A$) and the received signal ($U_E$),
wherein the received signal ($U_E$) is used to determine a frequency (f) of the excitation signal ($U_A$) if there is a specifiable phase shift ($\Delta\phi$),
wherein the received signal ($U_E$) is used to determine a damping (D) and/or a variable dependent on the damping (D) if there is a specifiable phase shift ($\Delta\phi$), and
wherein the density (ρ) and/or the viscosity (v) of the medium is/are analytically determined at least from the damping (D) and/or from the variable dependent on the damping (D), and from the frequency (f) of the excitation signal ($U_A$).

**2.** The method as claimed in claim 1,
wherein $\pm90°$ is mainly selected as the specifiable phase shift ($\Delta\phi$).

**3.** The method as claimed in at least one of the preceding claims,
wherein a specifiable change in the density (ρ) and/or the viscosity (v) of the medium (2) is monitored.

**4.** The method as claimed in claim 1 or 2,
wherein a specifiable fill level or limit level of the medium (2) in the container (3) or a limit level between a first and a second medium (2) is monitored.

**5.** The method as claimed in at least one of the preceding claims,
wherein at least one reference damping ($D_0$) and/or a variable dependent on the reference damping ($D_0$) is/are determined for the event that the unit capable of oscillating (4) is at least partially immersed in a reference medium (2), or in the case that the unit capable of oscillating (4) is caused to mechanically oscillate using an electrical excitation signal ($U_A$) in the absence of a medium (2).

**6.** The method as claimed in at least one of the preceding claims,
wherein a mathematical model with at least one equation of motion for an oscillatory movement of the unit capable of oscillating (4) is used to determine the density and/or the viscosity, said equation of motion considering the interaction between the unit capable of oscillating (4) and the medium (2) in the form of a compressive force ($F_D$) and a friction force ($F_R$) produced by the medium surrounding the unit capable of oscillating, as well as a friction force ($F_{SP}$) caused by a uniform movement of the unit capable of oscillating (4) within the medium (2).

**7.** The method as claimed in at least one of the preceding claims,
wherein the damping (D) and/or the reference damping ($D_0$) or the variable dependent on the damping (D) and/or reference damping ($D_0$) is/are determined

- based on a slope of a phase (φ) of the received signal ($U_E$) at the frequency (f) and/or reference frequency ($f_0$) of the excitation signal if the specifiable phase shift ($\Delta\phi$) is present,
- using the temporal profile of the amplitude (A) of the received signal ($U_E$) after the excitation signal ($U_A$) is deactivated, and/or using a modulation of the excitation signal ($U_A$).

8. A vibronic sensor for determining and/or monitoring at least one process variable of a medium (2) in a container (3) at least with an electronic unit (6) and a unit capable of oscillating (4), wherein the electronic unit (6) is configured to carry out at least one method as claimed in at least one of the preceding claims.

9. The vibronic sensor as claimed in claim 8,
wherein the electronic unit (6) comprises a storage unit.

10. The vibronic sensor as claimed in claim 8 or 9,

wherein the electronic unit (4) is configured to supply the unit capable of oscillating (4) with an excitation signal ($U_A$) which is made up of an excitation carrier signal with an excitation carrier frequency and an excitation modulation signal with an excitation modulation frequency,
and to receive a received signal ($U_E$) from the unit capable of oscillating (4), which is made up of a received carrier signal and a received modulation signal,
and wherein the electronic unit (6) is configured to determine at least the damping (D) and/or the reference damping ($D_0$) from the phase shift ($\Phi$) between the excitation modulation signal and the received modulation signal and/or at least from the received carrier signal.

11. The vibronic sensor as claimed in claim 9 or 10,
wherein the unit capable of mechanically oscillating (4) is an oscillating fork, a single bar or a membrane.

**Revendications**

1. Procédé destiné à la détermination et/ou à la surveillance de la densité ($\rho$) et/ou de la viscosité (v) d'un produit (3) dans un réservoir (2) à l'aide d'un capteur vibronique (1),

procédé pour lequel une unité apte à vibrer (4) est excitée en vibrations mécaniques à l'aide d'un signal d'excitation électrique ($U_A$), et les vibrations mécaniques de l'unité apte à vibrer (4) sont reçues et converties en un signal électrique de réception ($U_E$),
le signal d'excitation ($U_A$) étant généré à partir du signal de réception ($U_E$) de telle sorte qu'il existe au moins un déphasage ($\Delta\varphi$) prédéfinissable entre le signal d'excitation ($U_A$) et le signal de réception ($U_E$),
une fréquence (f) du signal d'excitation ($U_A$) étant déterminée à partir du signal de réception ($U_E$) en présence du déphasage ($\Delta\varphi$) prédéfinissable,
un amortissement (D) et/ou une grandeur dépendant de l'amortissement (D) étant déterminé à partir du signal de réception ($U_E$),
et
la densité ($\rho$) et/ou la viscosité (v) du produit étant déterminée(s) de manière analytique au moins à partir de l'amortissement (D) et/ou de la grandeur dépendant de l'amortissement (D) et de la fréquence (f) du signal d'excitation ($U_A$).

2. Procédé selon la revendication 1,
pour lequel le déphasage ($\Delta\varphi$) prédéfinissable est pour l'essentiel choisi à +/-90°.

3. Procédé selon au moins l'une des revendications précédentes,
pour lequel une modification prédéfinissable de la densité ($\rho$) et/ou de la viscosité (v) du produit (2) est surveillée.

4. Procédé selon la revendication 1 ou 2,
pour lequel un niveau ou un seuil prédéfini du produit (2) dans le réservoir (3) ou un seuil entre un premier et un deuxième produit (2) est surveillé.

5. Procédé selon au moins l'une des revendications précédentes,
pour lequel au moins un amortissement de référence ($D_0$) et/ou une grandeur dépendant de l'amortissement de référence ($D_0$) sont utilisés dans le cas où l'unité apte à vibrer (4) est au moins partiellement immergée dans un produit de référence (2), ou dans le cas où l'unité apte à vibrer (4) est excitée en vibrations mécaniques en l'absence d'un produit (2) au moyen d'un signal d'excitation électrique ($U_A$).

6. Procédé selon au moins l'une des revendications précédentes,

pour lequel, pour déterminer la densité et/ou la viscosité, on utilise un modèle mathématique comportant au moins une équation de mouvement pour un mouvement vibratoire de l'unité apte à vibrer (4), équation de mouvement pour laquelle l'interaction de l'unité apte à vibrer (4) avec le produit (2) se présente sous la forme d'une force de pression ($F_D$) et d'une force de frottement ($F_R$), lesquelles forces sont générées par le produit entourant l'unité apte à vibrer, ainsi qu'une force de frottement ($F_{SP}$) générée par un mouvement uniforme de l'unité apte à vibrer (4) à l'intérieur du produit (2).

**7.** Procédé selon au moins l'une des revendications précédentes,
pour lequel l'amortissement (D) et/ou l'amortissement de référence ($D_0$) ou la grandeur dépendant de l'amortissement (D) et/ou de l'amortissement de référence ($D_0$) est déterminée

- à partir d'une pente d'une phase ($\varphi$) du signal de réception ($U_E$) à la fréquence (f) et/ou à la fréquence de référence ($f_0$), du signal d'excitation en présence du déphasage ($\Delta\varphi$) prédéfinissable,
- à partir de l'évolution dans le temps de l'amplitude (A) du signal de réception ($U_E$) après une coupure du signal d'excitation ($U_A$), et/ou
- à partir d'une modulation du signal d'excitation ($U_A$).

**8.** Capteur vibronique destiné à la détermination et/ou à la surveillance d'au moins une grandeur process d'un produit (2) dans un réservoir (3), lequel capteur comprend au moins une unité électronique (6) et une unité apte à vibrer (4), l'unité électronique (6) étant conçue pour exécuter au moins un procédé selon au moins l'une des revendications précédentes.

**9.** Capteur vibronique selon la revendication 8,
pour lequel l'unité électronique (6) comprend une unité de mémoire.

**10.** Capteur vibronique selon la revendication 8 ou 9,

pour lequel l'unité électronique (4) est conçue
pour appliquer à l'unité apte à vibrer (4) un signal d'excitation ($U_A$), lequel signal est composé d'un signal porteur d'excitation avec une fréquence porteuse d'excitation et d'un signal de modulation d'excitation avec une fréquence de modulation d'excitation,
et pour recevoir un signal de réception ($U_E$) provenant de l'unité apte à vibrer (4), lequel signal est composé d'un signal porteur de réception et d'un signal de modulation de réception,
et l'unité électronique (6) étant conçue pour déterminer, à partir du déphasage ($\Phi$) entre le signal de modulation d'excitation et le signal de modulation de réception et/ou au moins à partir du signal porteur de réception, au moins l'amortissement (D) et/ou l'amortissement de référence ($D_0$).

**11.** Capteur vibronique selon la revendication 9 ou 10,
pour lequel l'unité apte à vibrer mécaniquement (4) est une fourche vibrante, une tige ou une membrane.

Fig. 1

Fig. 2

**EP 3 485 239 B1**

**IN DER BESCHREIBUNG AUFGEFÜHRTE DOKUMENTE**

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 00102010030982 A1
- DE 10050299 A1
- DE 102007043811 A1
- DE 10057974 A1
- DE 102006033819 A1
- DE 102015102834